# EUROPEAN PATENT SPECIFICATION

(11) **EP 3 185 060 B1**
(45) Date of publication and mention of the grant of the patent: **12.12.2018**
(21) Application number: 15202617.5
(22) Date of filing: 23.12.2015
(51) Int. Cl.: G02B 13/00, G02B 19/00

(54) **COLLIMATION LENS MODULE AND LIGHT SOURCE MODULE USING THE SAME**
KOLLIMATIONSLINSENMODUL UND LICHTQUELLENMODUL DAMIT
MODULE DE LENTILLE DE COLLIMATION ET MODULE DE SOURCE LUMINEUSE UTILISANT CELUI-CI

(43) Date of publication of application: 28.06.2017
(73) Proprietor: Himax Technologies Limited, Tainan City 74148 (TW)
(72) Inventor: LIN, Han-Ching, Tainan City 74148 (TW); LU, Yin-Dong, Tainan City 74148 (TW)
(74) Representative: Zardi, Marco

(56) References cited:
- EP-A2- 0 312 341
- US-A1- 2014 049 610

## Description

### BACKGROUND

### Field of Disclosure

The invention relates to a collimation module and a light source module using the same, and more particularly, to a wafer-level collimation module and a light source module using the same.

### Description of Related Art

A collimation light source is a popular device used in various electronic devices, such as projectors, liquid crystal displays and laser pointers. A conventional collimation light source may include a light emitting diode (LED) and a collimation lens module. The collimation lens module is used to collimate light lights emitted by the LED to provide collimated light.

However, fabrication cost of the collimation lens is high, and the operation of assembling the lens of the collimation lens module is difficult. EP 0312341 A2 discloses a high resolution imagery systems and methods, operated by illuminating the optical train with monochromatic light that constitutes a multiplicity of distributed sources having a substantial temporal coherence but spatial incoherence and by varying the slopes and widths of the grating rings. US 2014/049610 A1 discloses TOF depth cameras and methods for illuminating image environments with illumination light.

### SUMMARY

An aspect of the present invention is to provide a collimation lens module and a light source module using the same. The collimation lens module includes wafer-level lenses having flat surfaces, thereby enabling easy assembling and mass production.

In accordance with an embodiment of the present invention, the collimation lens module includes a first lens, a second lens, a third lens, a fourth lens and a fifth lens. The first lens is configured for receiving light, wherein the first lens is a negative aspheric lens. The second lens is disposed on the first lens, wherein the second lens is a positive lens. The third lens is disposed on the second lens, wherein the third lens is a negative lens. The fourth lens is disposed on the third lens, wherein the fourth lens is a positive lens. The fifth
lens is disposed on the fourth lens, wherein the fifth lens is a positive aspheric lens and configured for outputting the collimated light.

In accordance with another embodiment of the present invention, the light source module includes a light emitting diode (LED) and a collimating lens module. The LED is configured for emitting light. The collimating lens module is configured to collimate the light and output collimated light. The collimating lens module includes a first lens, a second lens, a third lens, a fourth lens and a fifth lens. The first lens is configured for receiving light, wherein the first lens is a negative aspheric lens. The second lens is disposed on the first lens, wherein the second lens is a positive lens. The third lens is disposed on the second lens, wherein the third lens is a negative lens. The fourth lens is disposed on the third lens, wherein the fourth lens is a positive lens. The fifth lens is disposed on the fourth lens, wherein the fifth lens is a positive aspheric lens and configured for outputting the collimated light.

### BRIEF DESCRIPTION OF THE DRAWINGS

The disclosure can be more fully understood by reading the following detailed description of the embodiment, with reference made to the accompanying drawings as follows:
FIG. 1 is a schematic diagram showing a cross-sectional view of a collimation lens module in accordance with an embodiment of the present invention.
FIG. 2a to FIG. 2d are schematic cross-sectional views of intermediate stages showing a method for fabricating the lenses.
FIG. 3 is a schematic diagram showing a cross-sectional view of a collimation lens module in accordance with an embodiment of the present invention.
FIG. 4 is a schematic diagram showing a cross-sectional view of a light source module 400 in accordance with an embodiment of the present invention.

### DETAILED DESCRIPTION

In the following description, the disclosure will be explained with reference to embodiments thereof. However, these embodiments are not intended to limit the disclosure to any specific environment, applications or particular implementations described in these embodiments. Therefore, the description of these embodiments is only for the purpose of illustration rather than to limit the disclosure. In the following embodiments and attached drawings, elements not directly related to the disclosure are omitted from depiction; and the dimensional relationships among individual elements in the attached drawings are illustrated only for ease of understanding, but not to limit the actual scale.

It will be understood that, although the terms "first" and "second" may be used herein to describe various elements, components, regions, layers and/or sections, these elements, components, regions, layers and/or sections should not be limited by these terms. These terms are only used to distinguish one element, component, region, layer or section from another.

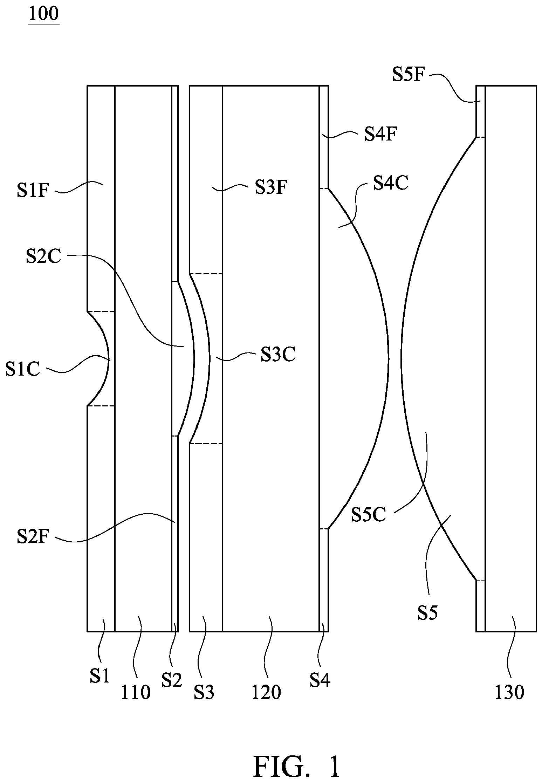

FIG. 1 is a schematic diagram showing a cross-sectional view of a collimation lens module 100 in accordance with an embodiment of the present invention. The collimation lens module 100 includes a first substrate 110, a second substrate 120, a third substrate 130, a first lens S1, a second lens S2, a third lens S3, a fourth lens S4, a fifth lens S5 disposed thereon. The first lens S1 receives light to be collimated, and the fifth lens S5 outputs collimated light. In this embodiment, the first lens S1, the second lens S2, the third lens S3, the fourth lens S4 and the fifth lens S5 are wafer-level lenses, but embodiments of the present invention are not limited thereto.

The first substrate 110, the second substrate 120 and the third substrate 130 have a refractive index substantially smaller than 1.6 and greater than 1.5 and have an Abbe number substantially smaller than 65 and greater than 45. The first substrate 110, the second substrate 120 and the third substrate 130 are formed by glass in this embodiment, but embodiments of the present invention are not limited thereto. In some embodiments, the first substrate 110, the second substrate 120 and the third substrate 130 are formed from plastic material such as acrylic resin and polycarbonate resin.

The first lens S1 and the second lens S2 are disposed on opposite surfaces of the first substrate 110. The first lens S1 is configured to receive light to be collimated. The first lens S1 is a negative aspheric lens having a curved portion S1C and a flat portion S1F. The second lens S2 is a positive lens having a curved portion S2C and a flat portion S2F. Specifically, the first lens S1 is a plano-concave lens, and the second lens S2 is a plano-convex lens, and a surface area occupied by the curved portion S1C is smaller that of the curved portion S2C.

The third lens S3 and the fourth lens S4 are disposed on opposite surfaces of the second substrate 120, and the third lens S3 is opposite to the second lens S2. The third lens S3 is a negative aspheric lens having a curved portion S3C and a flat portion S3F. The fourth lens S4 is a positive lens having a curved portion S4C and a flat portion S4F. Specifically, the third lens S3 is a plano-concave lens, and the fourth lens S4 is a plano-convex lens, and the surface area occupied by the curved portion S2C is smaller that of the curved portion S3C, and the surface area occupied by the curved portion S3C is smaller that of the curved portion S4C.

The fifth lens S5 is disposed on the third substrate 130 and opposite to the fourth lens S4. The fifth lens S5 is a positive lens having a curved portion S5C and a flat portion S5F. Specifically, the fifth lens S5 is a plano-convex lens, and the surface area occupied by the curved portion S4C is smaller that of the curved portion S5C.

In this embodiment, at least the first lens S1 and the fifth lens S5 are aspheric lenses. However, embodiments of the present invention are not limited thereto. In some embodiments of the present invention, the first lens S1, the second lens S2, the third lens S3, the fourth lens S4, and the fifth lens S5 are aspheric lenses.

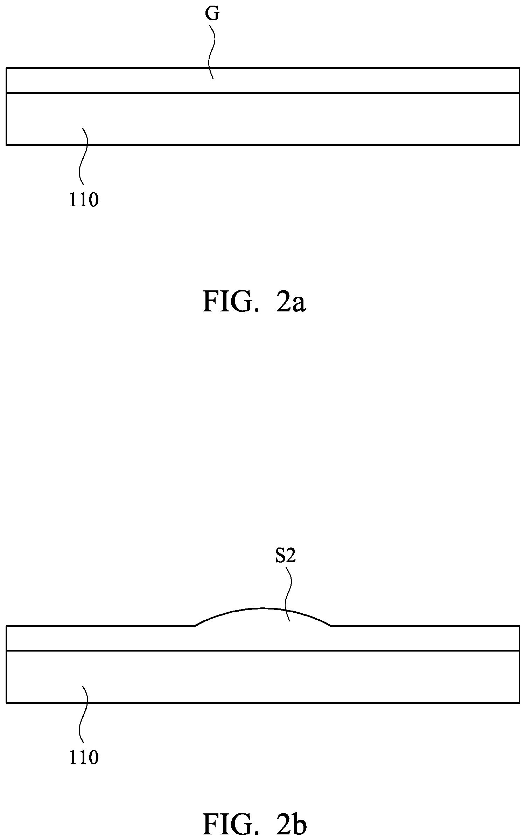

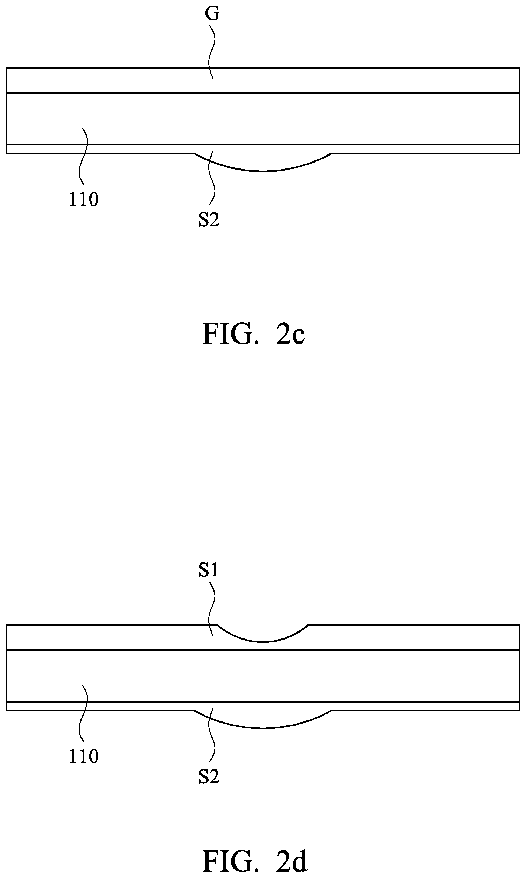

FIG. 2a to FIG. 2d are schematic cross-sectional views of intermediate stages showing a method for fabricating the first lens S1 and the second lens S2, in which the first lens S1 and the second lens S2 are fabricated in wafer level. At first, the first substrate 110 provided with a glue material G coated as shown in FIG. 2a. Then, a press-molding process is conducted to form the second lens S2, as shown in FIG. 2b. Thereafter, a surface of the first substrate 110 opposite to the second lens S2 is coated with the glue material G as shown in FIG. 2c. Then, another press-molding process is conducted to form the first lens S1 as shown in FIG. 2d.

The method for fabricating the third lens S3, the fourth lens S4 and the fifth lens S5 are similar to that of the first lens S1 and the second lens S2, and thus details of the method for fabricating the third lens S3, the fourth lens S4 and the fifth lens S5 are not repeated.

Since the collimation lens module 100 can be fabricated in wafer level, the size of the collimation lens is decreased, and assembling of the collimation lens module 100 can be easier than that of a conventional lens module.

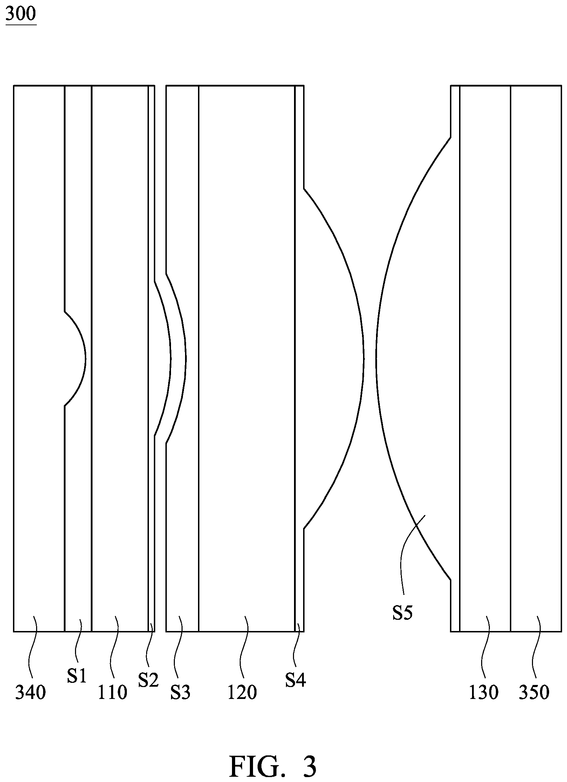

Referring to FIG. 3, FIG. 3 is a schematic diagram showing a cross-sectional view of a collimation lens module 300 in accordance with an embodiment of the present invention. The collimation lens module 300 is similar to the collimation lens module 100, but the difference is in that the collimation lens module 300 further includes a window substrate 340 and a cover substrate 350. The window substrate 340 is disposed on the first lens S1 to protect the first lens S1 and used as a widow to receive light, and the cover substrate 350 is disposed on the substrate 130 to protect the substrate 130.

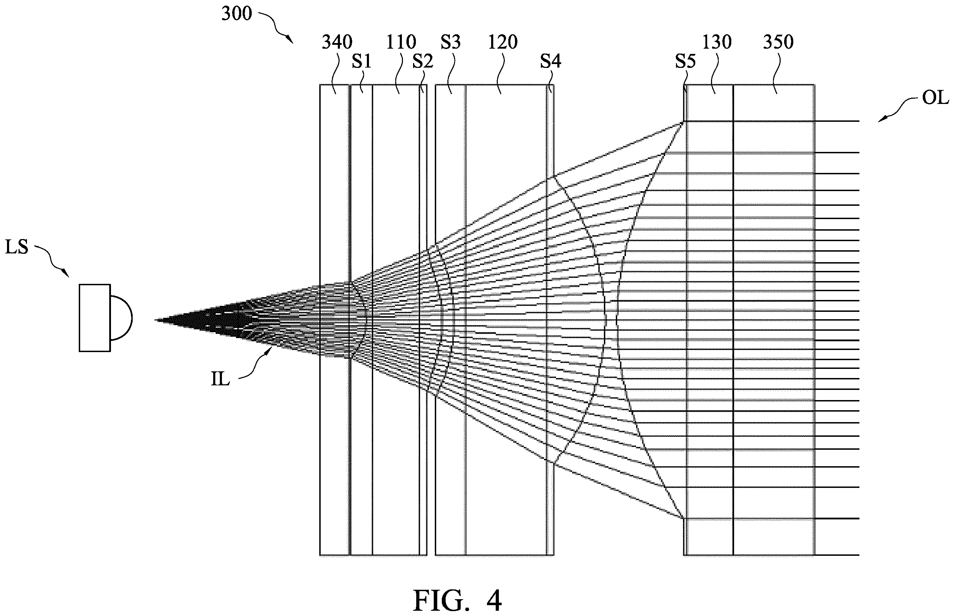

Referring to FIG. 4, FIG. 4 is a schematic diagram showing a cross-sectional view of a light source module 400 in accordance with an embodiment of the present invention. The light source module 400 includes the collimation lens module 300 and a light emitting diode (LED) LS. The LED LS is configured to emit light IL to the window substrate 340 of the collimation lens module 300. The light IL is collimated by the first lens S1, the second lens S2, the third lens S3, the fourth lens S4 and the fifth lens S5, and then the collimated light OL is outputted from the cover substrate 350.

## Claims

1. A collimating lens module (100) adapted for collimating light, the collimating lens module (100) consisting of:
a first lens (S1), wherein the first lens (S1) is a negative aspheric lens;
a second lens (S2), wherein the second lens (S2) is a positive lens;
a third lens (S3), wherein the third lens (S3) is a negative lens;
a fourth lens (S4), wherein the fourth lens (S4) is a positive lens; and
a fifth lens (S5), wherein the fifth lens (S5) is a positive aspheric lens, further comprising: a first substrate (110), wherein the first lens (S1) and the second lens (S2) are formed on opposite surfaces of the first substrate (110);
a second substrate (120), wherein the third lens (S3) and the fourth lens (S4) are formed on opposite surfaces of the second substrate (120), and the third lens (S3) is opposite to the second lens (S2); and
a third substrate (130), wherein the fifth lens (S5) is formed on the third substrate (130) and opposite to the fourth lens (S4).

2. The collimating lens module of claim 1, wherein the second lens (S2), the third lens (S3) and the fourth lens (S4) are aspheric lenses.

3. The collimating lens module of claim 1, wherein the second lens (S2), the fourth lens (S4) and the fifth lens (S5) are plano-convex lenses.

4. The collimating lens module of claim 1, wherein the first lens (S1) and the third lens (S3) are plano-concave lenses.

5. The collimating lens module of claim 1, wherein the first substrate (110), the second substrate (120) and the third substrate (130) are glass substrates.

6. The collimating lens module of claim 5, wherein each of a refractive index of the first substrate (110), a refractive index of the second substrate (120) and a refractive index of the third substrate (130) is substantially smaller than 1.6 and greater than 1.5.

7. The collimating lens module of claim 5, wherein each of an Abbe number of the first substrate (110), an Abbe number of the second substrate (120) and an Abbe number of the third substrate (130) is substantially smaller than 65 and greater than 45.

8. The collimating lens module of claim 1, wherein the first lens (S1), the second lens (S2), the third lens (S3), the fourth lens (S4) and the fifth lens (S5) are wafer-level lenses.

9. A light source module adapted for providing collimated light, the light source module comprising:
a light emitting diode (LED) (LS) configured for emitting light (IL);
a collimating lens module (100) according to any one of claims 1 to 8.

## Patentansprüche

1. Kollimationslinsenmodul (100), das zum Kollimieren von Licht ausgebildet ist, wobei das Kollimationslinsenmodul (100) aufweist:
eine erste Linse (S1), wobei es sich bei der ersten Linse (S1) um eine negative asphärische Linse handelt;
eine zweite Linse (S2), wobei es sich bei der zweiten Linse (S2) um eine positive Linse handelt;
eine dritte Linse (S3), wobei es sich bei der dritten Linse (S3) um eine negative Linse handelt;
eine vierte Linse (S4), wobei es sich bei der vierten Linse (S4) um eine positive Linse handelt; und
eine fünfte Linse (S5), wobei es sich bei der fünften Linse (S5) um eine positive asphärische Linse handelt,
sowie weiterhin aufweisend:
ein erstes Substrat (110), wobei die erste Linse (S1) und die zweite Linse (S2) auf gegenüberliegenden Oberflächen des ersten Substrats (110) gebildet sind;
ein zweites Substrat (120), wobei die dritte Linse (S3) und die vierte Linse S4) auf gegenüberliegenden Oberflächen des zweiten Substrats (120) gebildet sind und die dritte Linse (S3) der zweiten Linse (S2) gegenüberliegt; und
ein drittes Substrat (130), wobei die fünfte Linse (S5) auf dem dritten Substrat (130) und gegenüber der vierten Linse (S4) gebildet ist.

2. Kollimationslinsenmodul nach Anspruch 1,
wobei die zweite Linse (S2), die dritte Linse (S3) und die vierte Linse (S4) asphärische Linsen sind.

3. Kollimationslinsenmodul nach Anspruch 1,
wobei die zweite Linse (S2), die vierte Linse (S4) und die fünfte Linse (S5) plankonvexe Linsen sind.

4. Kollimationslinsenmodul nach Anspruch 1,
wobei die erste Linse (S1) und die dritte Linse (S3) plankonkave Linsen sind.

5. Kollimationslinsenmodul nach Anspruch 1,
wobei das erste Substrat (110), das zweite Substrat (120) und das dritte Substrat (130) Glassubstrate sind.

6. Kollimationslinsenmodul nach Anspruch 5,
wobei ein Brechungsindex des ersten Substrats (110), ein Brechungsindex des zweiten Substrats (120) und ein Brechungsindex des dritten Substrats (130) jeweils im Wesentlichen kleiner als 1,6 und größer als 1,5 sind.

7. Kollimationslinsenmodul nach Anspruch 5,
wobei eine Abbe-Zahl des ersten Substrats (110), eine Abbe-Zahl des zweiten Substrats (120) und eine Abbe-Zahl des dritten Substrats (130) jeweils im Wesentlichen kleiner als 65 und größer als 45 sind.

8. Kollimationslinsenmodul nach Anspruch 1,
wobei die erste Linse (S1), die zweite Linse (S2), die dritte Linse (S3), die vierte Linse (S4) und die fünfte Linse (S5) Linsen auf Waferebene sind.

9. Lichtquellenmodul, das zum Bereitstellen von kollimiertem Licht ausgebildet ist, wobei das Lichtquellenmodul aufweist:
eine lichtemittierende Diode (LED) (LS), die zum Emittieren von Licht (IL) ausgebildet ist;
ein Kollimationslinsenmodul (100) nach einem der Ansprüche 1 bis 8.

## Revendications

1. Un module (100) formant lentille de collimation adapté pour collimater de la lumière, le module (100) formant lentille de collimation étant constitué par :
une première lentille (S1), la première lentille (S1) étant une lentille asphérique négative ;
une deuxième lentille (S2), la deuxième lentille (S2) étant une lentille positive ;
une troisième lentille (S3), la troisième lentille (S3) étant une lentille négative ;
une quatrième lentille (S4), la quatrième lentille (S4) étant une lentille positive ; et
une cinquième lentille (S5), la cinquième lentille (S5) étant une lentille asphérique positive,
comprenant en outre : un premier substrat (110), la première lentille (S1) et la deuxième lentille (S2) étant formées sur des surfaces opposées du premier substrat (110) ;
un deuxième substrat (120), la troisième lentille (S3) et la quatrième lentille (S4) étant formées sur des surfaces opposées du deuxième substrat (120), et la troisième lentille (S3) étant opposée à la deuxième lentille (S2) ; et
un troisième substrat (130), la cinquième lentille (S5) étant formée sur le troisième substrat (130) et étant opposée à la quatrième lentille (S4).

2. Le module formant lentille de collimation selon la revendication 1, dans lequel la deuxième lentille (S2), la troisième lentille (S3) et la quatrième lentille (S4) sont des lentilles asphériques.

3. Le module formant lentille de collimation selon la revendication 1, dans lequel la deuxième lentille (S2), la quatrième lentille (S4) et la cinquième lentille (S5) sont des lentilles plan-convexes.

4. Le module formant lentille de collimation selon la revendication 1, dans lequel la première lentille (S1) et la troisième lentille (S3) sont des lentilles plan-concaves.

5. Le module formant lentille de collimation selon la revendication 1, dans lequel le premier substrat (110), le deuxième substrat (120) et le troisième substrat (130) sont des substrats en verre.

6. Le module formant lentille de collimation selon la revendication 5, dans lequel chacun parmi un indice de réfraction du premier substrat (110), un indice de réfraction du deuxième substrat (120) et un indice de réfraction du troisième substrat (130) est sensiblement inférieur à 1,6 et supérieur à 1,5.

7. Le module formant lentille de collimation selon la revendication 5, dans lequel chacun parmi un nombre d'Abbe du premier substrat (110), un nombre d'Abbe du deuxième substrat (120) et un nombre d'Abbe du troisième substrat (130) est sensiblement inférieur à 65 et est supérieur à 45.

8. Le module formant lentille de collimation selon la revendication 1, dans lequel la première lentille (S1), la deuxième lentille (S2), la troisième lentille (S3), la quatrième lentille (S4) et la cinquième lentille (S5) sont des lentilles de niveau de tranche, ou "wafer level".

9. Un module formant source de lumière adapté pour fournir une lumière collimatée, le module formant source de lumière comprenant :
une diode électroluminescente (DEL) (LS) configurée pour émettre de la lumière (IL) ;
un module (100) formant lentille de collimation selon l'une quelconque des revendications 1 à 8.
